# EUROPEAN PATENT SPECIFICATION

(11) **EP 4 122 328 B1**
(45) Date of publication and mention of the grant of the patent: **24.06.2026**
(21) Application number: 21770852.8
(22) Date of filing: 05.03.2021
(51) Int. Cl.: A23L 11/00, A23L 11/60, A23C 11/10, A23C 20/02, A23L 2/38, A23L 2/385, A23L 11/40, A23L 11/45, A23L 11/50, A23L 11/65

(54) **PRODUCTION METHOD FOR A FERMENTED SOYBEAN BEVERAGE CONCENTRATE**
VERFAHREN ZUR HERSTELLUNG EINES KONZENTRIERTEN FERMENTIERTEN SOJAGETRÄNKES
PROCEDE DE PRODUCTION D'UN CONCENTRE DE BOISSON FERMENTEE A BASE DE SOJA

(30) Priority: 16.03.2020 JP 2020045455
(43) Date of publication of application: 25.01.2023
(73) Proprietor: Kikkoman Corporation, Noda-shi, Chiba 278-8601 (JP)
(72) Inventor: AOYAMA, Kenji, Tokyo 105-0003 (JP)
(74) Representative: Zacco Sweden AB
(86) International application number: PCT/JP2021/008650
(87) International publication number: WO 2021/187159

(56) References cited:
- EP-A1- 2 695 522
- CA-A1- 2 260 129
- JP-A- 2017 086 039
- JP-A- 2018 068 267
- JP-A- S60 237 938
- KR-A- 20190 072 316
- US-A- 3 937 843
- US-A- 4 664 919
- US-A1- 2014 113 866

## Description

### Technical Field

The present invention relates to a fermented soy beverage concentrate and a method for producing the fermented soy beverage concentrate.

### Background Art

Protein-rich plant materials such as beans including soybeans and peas, nuts, and seeds have been recently attracting global attention as non-animal protein sources alternative to milk and meat in view of health and food resource, and growing in demand. Such protein-rich plant materials are used as alternatives to dairy products such as milk and cheese, and use of them as alternatives to meat is widely spreading in recent years. The global market size of artificial meat has been estimated to be 250 billion yen or more in 2020, and predicted to surpass 1.8 trillion yen by 2030.

Powders obtained by extracting protein from bean, and drying and powdering the protein are variously used as ingredient of processed food. The consumption of soymilk as beverages is increasing year by year; for example, the production of soymilk in Japan has increased by approximately two times in the last 10 years. Thick soymilk with increased protein contents have been developed, and consumption thereof is expanding.

Fermented food is widely known as natural and healthy food, and, in particular, the market size of product using lactic acid bacteria or bifidobacteria, such as dairy products, is expanding every year. Microorganisms such as lactic acid bacteria are recently used for various food, not only for milk, and expected to provide their wide variety of health effects including intestinal regulation effect and immunoregulation.

In such circumstances, yogurt-like fermentation product obtained by fermenting soymilk with a microorganism such as a lactic acid bacterium has been similarly attracting attention as fermentation product of plant material. However, soybean-derived fermented product has problems with flavor such as the odor of bean and the grassy odor, and a problem with physical properties, specifically, the formation of brittle structure like tofu. For these reason, various attempts have been made, such as selection of species of lactic acid bacteria for use and improvement of flavor, for example, through search for additives (Patent Literature 1).

### Citation List

### Patent Literature

Patent Literature 1: Japanese Patent Laid-Open No. 2018-068267 describes soy milk where the grassy odor is reduced by lactic acid fermentation.
Patent Literature 2: US 3 937 843 describes a method for eliminating the bean odor from soy milk by lactic acid fermentation.
Patent Literature 3: US 2014/113866 describes how the taste and smell of soybean-derived food or beverages can be improved by using a fat reduced soybean protein material.
Patent Literature 4: KR 2019 0072316 describes a soybean cheese where the soybeans undergo heat treatment to remove unwanted smell.

### Summary of Invention

### Technical Problem

In spite of the large demand of fermentation product of soymilk rich in soy protein, as plant-derived protein supply source, as described above, the variety of such fermentation product is still limited. In particular, when concentration of a fermentation product of soymilk is attempted to increase the soy protein concentration for use as a protein supply food, the grassy flavor and physical properties with brittleness become more significant. Many proposals have been made to solve these problems, and one of them is selection of specific species of lactic acid bacteria. However, this results in difficulty, for example, in effective use of microorganisms having specific functions such as lactic acid bacteria and differentiation of product obtained through fermentation with a microorganism having unique characteristics such as a lactic acid bacterium.

Milk and soybean have different allergens, and each is specified as a specific ingredient. Accordingly, diversion of a production system for dairy product to production of soy product involves risks in terms of food safety, and installation of a special system is needed for fermentation of soymilk. Fermentation systems are required to include a temperature controller and to have anti-mold properties and the like, and thus needs a large amount of capital investment, which inhibits the diffusion of fermentation product of soymilk.

In such circumstances, the object of the present invention is to provide a method for producing a fermented soy beverage according to claim 1.

### Solution to Problem

The present inventors have found that the objects can be achieved with a fermented soy beverage concentrate obtained by the method of claim 1.

### Advantageous Effects of Invention

The present invention provides a method for producing the fermented soy beverage concentrate, in particular, a fermented soy beverage concentrate containing soy protein in an amount larger than the total amount of soy protein contained in a fermented soy beverage obtained in a fermentation step. The production method of the present invention advantageously allows the production even with a fermentation system of small scale for the amount of the final product.

### Brief Description of Drawings

[Figure 1] Figure 1 shows a graph representing the relationship between pH in a volume increase step and collected solid fraction ratios in fermented soy beverage concentrate obtained through fermentation of different soy beverages in Example 1.
[Figure 2] Figure 2 shows a graph representing the relationship between pH in a volume increase step and collected solid fraction ratios in fermented soy beverage concentrate obtained through fermentation with different lactic acid bacteria in Example 4. Also shown is the relationship between pH when lactic acid was added to a soy beverage and collected solid fraction ratios in Comparative Example 1 (nonfermented, with addition of lactic acid).
[Figure 3] Figure 3 shows a graph representing the relationship between mixing ratios and pH when a soy beverage was mixed in a fermented soy beverage in Example 5.
[Figure 4] Figure 4 shows the correlation between the acidity and pH of a fermented soy beverage obtained through fermentation of soy beverage A in Reference Example. Also shown is an approximate expression representing the relationship between the two.
[Figure 5] Figure 5 shows the relationship between the amount of a soy beverage added to a fermented soy beverage and pH after mixing in Example 6. A soy beverage containing sodium malate and a soy beverage containing no sodium malate were fermented by using the same lactic acid bacterium under the same conditions, and a soy beverage containing no sodium malate was then added to each of the fermented soy beverages and mixed together, in Example 6.
[Figure 6] Figure 6 shows a graph for comparing the physical properties of a fermented soy beverage prepared in Example 8 and a fermented soy beverage concentrate obtained by adding a soy beverage to the same fermented soy beverage and then concentrating the resultant.
[Figure 7] Figure 7 shows a graph for comparing the physical properties of fermented soy beverage concentrate obtained in Example 9 in such a manner that a soy beverage in different amounts was added to a fermented soy beverage to give different pH after a volume increase step. Each arrow indicates a point at the phase difference δ° = 45.
[Figure 8] Figure 8 shows a graph for comparing the physical properties (hysteresis curves) of fermented soy beverage concentrate obtained through fermentation with different lactic acid bacteria in Example 10.
[Figure 9] Figure 9 shows a graph for comparing the physical properties (linear modulus measurement with varied strain) of fermented soy beverage concentrate obtained through fermentation with different lactic acid bacteria in Example 10.
[Figure 10] Figure 10 shows a graph for comparing particle size distribution and cumulative frequency calculated from smaller particle size for fermented soy beverage concentrate obtained in Example 11 in such a manner that a soy beverage was added to a fermented soy beverage at different temperatures in a volume increase step.
[Figure 11] Figure 11 shows a graph representing the solid fraction ratios of fermented soy beverage concentrate given with different centrifugal force in a concentration step in Example 12.

### Description of Embodiments

Now, embodiments of the present invention (hereinafter, also referred to as "the present embodiment") will be described; however, the present invention is not limited to the present embodiment.

The present embodiment relates to a method for producing a fermented soy beverage concentrate, and this method includes:
a fermentation step of fermenting a soy beverage by adding a microorganism to the soy beverage;
a volume increase step of mixing a fermented soy beverage obtained in the fermentation step and a soy beverage together to achieve an increased volume, thereby giving a mixture having a pH of lower than 6.0; and
a concentration step of concentrating a solid content from the mixture obtained in the volume increase step.

Herein, each soy beverage may be any soy beverage that is produced from soybeans and water as ingredient and forms aggregate of soy protein through fermentation by a microorganism, without limitation. Examples thereof include soymilk and processed soymilk conforming to the standard for soymilk specified in the Japanese Agricultural Standards, and soymilk beverage that conform to the same standard and form aggregate of soy protein through fermentation by a microorganism. A soymilk-like beverage containing dietary fiber of soybean (tofu refuse (Okara)) suspended therein without being removed, what is called "whole-soy beverage", is also included in soy beverage in the present embodiment. Beverage produced by dissolving or suspending soy flour, which is finely crushed soybean, or powdered soymilk, which is dehydrated soymilk, are also included. Each soy beverage may contain any other food ingredient or food additive, unless the food ingredient or food additive interferes with the aggregation of soy protein.

The soy solid content and amount of soy protein in each soy beverage may be any values that allow soy protein to aggregate through fermentation by a microorganism, without limitation. For example, a soy beverage having a soy solid content of 1% or more (in terms of soy protein: 0.5% or more), preferably of 4% or more (in terms of soy protein: 1.8% or more), more preferably of 6% or more (in terms of soy protein: 3.0% or more), can be used. According to the Japanese Agricultural Standards, the soy solid content of soymilk is 8% or more (in terms of soy protein: 3.8% or more), the soy solid content of processed soymilk is 6% or more (in terms of soy protein: 3.0% or more), and the soy solid content of soymilk beverages is 4% or more (in terms of soy protein: 1.8% or more). The upper limits of the soy solid content and amount of soy protein in each soy beverage are not limited, and the soy solid content of each soy beverage may be, for example, 20% or less or 15% or less. Herein, "%" indicates "% by weight", unless otherwise specified.

The microorganism to be used for fermentation of soy beverage may be any microorganism that can allow protein in soy beverage to aggregate through fermentation and is applicable to food, without limitation.

Unless otherwise specified, the classification of microorganisms herein is based on the taxonomy known in March 2020 (herein, referred to as "classic taxonomy"). Examples of the classic taxonomy include classification based on the description in Bergey's Manual of Systematic Bacteriology 2nd edition (classification of the genus Lactobacillus is described in Volume 3 (2009)). In particular, the genus Lactobacillus was known to be composed of 262 species on the basis of the classic taxonomy in March 2020, but revised genome-based taxonomy (herein, referred to as "modern taxonomy") was proposed in April 2020 (Zheng J, et al., Int J Syst Evol Microbiol. 2020 Apr; 70(4): 2782-2858; the modern taxonomy uses genomic data on reference strains on August 19, 2019). While the microorganisms classified according to the classic taxonomy in the genus Lactobacillus have been reclassified according to the modern taxonomy into 25 genera (the genus Lactobacillus, the genus Amylolactobacillus, the genus Holzapfelia, the genus Bombilactobacillus, the genus Companilactobacillus, the genus Lapidilactobacillus, the genus Agrilactobacillus, the genus Schleiferilactobacillus, the genus Lacticaseibacillus, the genus Paralactobacillus, the genus Latilactobacillus, the genus Loigolactobacillus, the genus Dellaglioa, the genus Liquorilactobacillus, the genus Ligilactobacillus, the genus Lactiplantibacillus, the genus Furfurilactobacillus, the genus Paucilactobacillus, the genus Limosilactobacillus, the genus Secundilactobacillus, the genus Levilactobacillus, the genus Fructilactobacillus, the genus Acetilactobacillus, the genus Apilactobacillus, the genus Lentilactobacillus), the statement "the genus Lactobacillus" herein refers to microorganisms classified in the genus Lactobacillus on the basis of the classic taxonomy, unless otherwise specified.

Representative examples of microorganisms to be used for fermentation of soy beverage include microorganisms known to be able to grow in soy beverage and perform acid generation such as Lactobacillus plantarum (name in modern taxonomy: Lactiplantibacillus plantarum), Lactobacillus brevis (name in modern taxonomy: Levilactobacillus brevis), Streptococcus thermophilus, and Lactococcus lactis. Even a microorganism incapable of using sugar source and nutrient originally contained in soy beverage, such as sucrose, raffinose, and stachyose, can be used if the microorganism can perform acid generation in a soy beverage with addition of sugar source and nutrient available for the microorganism, such as glucose and fructose, to the soy beverage. Examples of such microorganisms include the genus Bifidobacterium and Lactobacillus delbrueckii subsp. bulgaricus. A yeast such as the genus Saccharomyces may be used for flavor improvement. A microorganism known to have health function, such as the genus Bifidobacterium and Lactobacillus gasseri, may be used.

In a mode, the microorganism to be used for soy fermentation in the present embodiment is selected from lactic acid bacteria and bifidobacteria, and a lactic acid bacterium and a bifidobacterium may be used in combination. Examples of the microorganism include lactic acid bacteria and bifidobacteria belonging to the genus Lactobacillus, the genus Lactococcus, the genus Leuconostoc, the genus Streptococcus, the genus Pediococcus, and the genus Bifidobacterium. Examples of species belonging to these genera include Lactobacillus acidophilus, Lb. brevis (name in modern taxonomy: Levilactobacillus brevis), Lb. casei (name in modern taxonomy: Lacticaseibacillus casei), Lb. delbrueckii subsp. bulgaricus, Lb. delbrueckii subsp. lactis, Lb. fermentum (name in modern taxonomy: Limosilactobacillus fermentum), Lb. gasseri, Lb. helveticus, Lb. johnsonii, Lb. paracasei (name in modern taxonomy: Lacticaseibacillus paracasei), Lb. plantarum (name in modern taxonomy: Lactiplantibacillus plantarum), Lb. reuteri (name in modern taxonomy: Limosilactobacillus reuteri), Lb. rhamnosus (name in modern taxonomy: Lacticaseibacillus rhamnosus), Lactococcus lactis subsp. cremoris, Lc. lactis subsp. lactis, Lc lactis subsp. lactis biovar. diacetylactis, Leuconostoc mesenteroides, Pediococcus acidilactici, P. pentosaceus, Streptococcus thermophiles, Bifidobacterium breve, B. infantis, and B. longum. In a mode, the microorganism to be used for soy fermentation in the present embodiment includes a microbial species belonging to a genus selected from the genus Lactobacillus, the genus Lactococcus, the genus Leuconostoc, and the genus Streptococcus.

In a mode, the microorganism to be used for soy fermentation in the present embodiment is selected from the genus Lactobacillus, the genus Amylolactobacillus, the genus Holzapfelia, the genus Bombilactobacillus, the genus Companilactobacillus, the genus Lapidilactobacillus, the genus Agrilactobacillus, the genus Schleiferilactobacillus, the genus Lacticaseibacillus, the genus Paralactobacillus, the genus Latilactobacillus, the genus Loigolactobacillus, the genus Dellaglioa, the genus Liquorilactobacillus, the genus Ligilactobacillus, the genus Lactiplantibacillus, the genus Furfurilactobacillus, the genus Paucilactobacillus, the genus Limosilactobacillus, the genus Secundilactobacillus, the genus Levilactobacillus, the genus Fructilactobacillus, the genus Acetilactobacillus, the genus Apilactobacillus, the genus Lentilactobacillus, the genus Lactococcus, the genus Leuconostoc, the genus Streptococcus, the genus Pediococcus, and the genus Bifidobacterium, wherein each of the microbial genera is based on the modern taxonomy. In a mode, the microorganism to be used for soy fermentation in the present embodiment is preferably selected from the genus Lactobacillus, the genus Lacticaseibacillus, the genus Latilactobacillus, the genus Lactiplantibacillus, the genus Limosilactobacillus, the genus Levilactobacillus, and the genus Streptococcus, which are particularly frequently used as fermentation starters or probiotics in the food industry, wherein each of the microbial genera is based on the modern taxonomy.

In a mode of the present embodiment, the microorganism is a polysaccharide-generating bacterium. Use of a polysaccharide-generating bacterial strain having superior polysaccharide generation ability gives soft and smooth fermented soy beverage concentrate. All lactic acid bacteria and bifidobacteria are capable of generating polysaccharide, and representative species that provide high generations include Leuconostoc mesenteroides, Lactococcus lactis subsp. cremoris, and Streptococcus thermophilus. In a mode, these can be used singly or in combination with another bacterium.

A plurality of microbial species may be used in combination for fermentation of soy beverage, and commercially available product may be used. For example, in recent years, many manufacturers of starters are selling microorganisms such as lactic acid bacteria for producing yogurt product with claim of being low-fat or fat-free, and such a microorganism enables production of a fermentation product that is soft and smooth in spite of the low fat content by generating a large amount of polysaccharide. Such a microorganism may be used, as long as the microorganism allows protein in soy beverage to aggregate. While microorganisms including lactic acid bacteria were conventionally sold for the dairy, yogurt starters containing such a microorganism and prepared with milk-free materials for application of the microorganism to fermentation of plant matters are now commercially available, and may be used. Various starters are commercially available, for example, from Chr. Hansen Holding A/S
(YOFLEX series, EXACT series, etc.), DuPont de Nemours, Inc. (YO-MIX series, CHOOZIT series, etc.), SACCO Inc. (CRYOFAST series, LYOFAST series, etc.), and DSM (DELVO-YOG series, DELVO-FRESH series, etc.), and an appropriate starter can be selected from those starters for use with considering the characteristics of a concentrate to be achieved, the availability of milk-derived components, flavor, and so on. In an embodiment, a starter known to provide excellent flavor and physical properties particularly in fermentation of soymilk and a microorganism such as a lactic acid bacterium can be used.

The fermentation step will be described.

The temperature of a soy beverage to be used for fermentation is adjusted to a temperature suitable for a microorganism to be used for fermentation (typically in the range of 20°C to 45°C), and the soy beverage is then inoculated with the microorganism. Any common starter inoculation method may be applied in the inoculation of the microorganism to be used as a starter, as long as the inoculation is performed in a hygienic manner. The soy beverage may be inoculated by directly adding a commercially available lactic acid bacteria powder or frozen lactic acid bacteria solution to the soy beverage, and a culture of an inoculum obtained in advance by preculture of soymilk or the like may be added to the soy beverage. It is desired to subject the soy beverage to treatment to prevent contamination with saprophytic bacteria, such as sterilization, disinfection, and decolonization, in advance of the inoculation with the microorganism. It is preferable to homogenize the soy beverage before or after the inoculation prior to fermentation.

It is desired to stir the soy beverage after inoculation for a specific time to disperse the microorganism homogeneously in a fermentation vessel. The volume ratio of the starter to the soy beverage in the inoculation can be appropriately set according to the concentration and activity of the microorganism contained in the starter, and is typically in the range of 0.0001% to 10%. The volume ratio in the inoculation is preferably in the range of 0.001% to 0.1% for a concentrated starter, and preferably in the range of 0.1% to 5% if a culture is used as the starter. If a commercially available microorganism is used, inoculation can be performed with the microorganism in the recommended amount. Similarly, the fermentation time can be appropriately set according to the microorganism to be used. Some microorganisms need several hours for completion of fermentation, and others take several days therefor. It is desired to perform the fermentation step at a temperature around the optimum temperature for the microorganism. Microorganisms for high-temperature short-time fermentation can be cultured, for example, at a temperature in the range of 35°C to 45°C for 2 hours to 20 hours, preferably for 2 hours to 10 hours. Microorganisms for low-temperature long-time fermentation can be cultured, for example, at a temperature in the range of 20°C to 35°C for 10 hours to 240 hours, preferably for 10 hours to 72 hours.

While the isoelectric point of protein in soybean is around pH 4.5, gradual aggregation of a solid content starts in soy beverage at a pH of lower than about 5.9. The pH at which the aggregation starts varies to some extent among the types of soy beverages, production methods, and lots. In particular, for soy beverage containing, like processed soymilk, a component other than soybean such as an emulsifier and a defoamer, the pH at which the aggregation starts may vary because of the influence of the component other than soybean. The fermentation step is continued until the pH of the soy beverage has fallen below the pH at which the aggregation starts. The lower the pH at the completion of fermentation, the more a soy beverage can be added in the subsequent volume increase step, and thus the production volume of a fermented soy beverage concentrate as the final product can be increased. If the amount of a soy beverage added in the volume increase step is large, on the other hand, it follows that components generated in the fermentation step and the microorganism are diluted. Accordingly, the pH at the completion of fermentation can be determined in view of factors required for the product. For example, the pH of the fermented soy beverage to be obtained in the fermentation step can be in the range of 3.5 or higher and 5.5 or lower, 3.5 or higher and 4.7 or lower, 3.8 or higher and 5.5 or lower, or 3.8 or higher and 4.7 or lower, is preferably in the range of 3.5 or higher and 5.5 or lower (if a value rounded to the first decimal place falls within the range, the value is acceptable; hereinafter, the same is applied for pH), and more preferably in the range of 3.8 or higher and 4.7 or lower.

The soy beverage in the fermentation step may contain a buffer. The buffer may be any buffer addition of which to foods is acceptable, without limitation; examples thereof include organic acid and salts thereof such as malic acid and salts thereof (e.g., sodium malate), citric acid and salts thereof (e.g., sodium citrate), and succinic acid and salts thereof (e.g., sodium succinate). The acidity of the fermented soy beverage with addition of the buffer is higher (containing more lactic acid) than that without addition of the buffer because of the buffering effect, even if the pH at the completion of the fermentation step with addition of the buffer is almost the same as that without addition of the buffer. By virtue of this, a larger amount of a soy beverage can be added to the fermented soy beverage in the subsequent volume increase step. The buffer herein may be a buffer having pH adjustment effect, and may be the same as a pH adjuster in the volume increase step described later, as long as the buffer has the desired buffering effect. In a mode, the soy beverage can contain a buffer whose acid dissociation constant (pKa) is preferably between 3.8 and 6, for example, 3.8 or higher and 5.9 or lower. Any amount added that allows the buffering ability to be exhibited can be employed, without limitation.

The volume increase step will be described.

Into the fermented soy beverage after the completion of the fermentation step, a soy beverage is mixed to achieve an increased volume. It is preferable for facilitating mixing to crush curd formed through acid coagulation. The curd may be crushed immediately after the completion of the fermentation, or after cooling the fermentation product. Crushing the curd after cooling is preferred because the structure of the fermented soy beverage becomes smoothed in most cases. Any method can be used for crushing the curd, without limitation. If the curd is hard, the curd is crushed with a mechanical system such as an agitator and a curd breaker. If the curd is soft, the curd may be crushed with a pump for feeding even without stirring. Alternatively, the curd can be crushed by passing through a mixer provided in a feeding tube.

The soy beverage to be mixed in the volume increase step may be the same as or different from the soy beverage used for the fermentation with respect to type and composition. Regarding the procedure of mixing, the soy beverage may be gradually added to a given amount of the fermented soy beverage, and, alternatively, the fermented soy beverage may be gradually added to a given amount of the soy beverage. A method may be employed in which the fermented soy beverage and the soy beverage are mixed with an inline mixer or the like while they are simultaneously fed at a constant ratio by using a metering pump or the like. It is desired for any of the cases to mix the fermented soy beverage and the soy beverage together by stirring in the container so that the mixture can be homogenized as much as possible.

The mixing ratio between the fermented soy beverage and the soy beverage is any value that allows the resulting mixture to have a pH of lower than 6.0, and can be arbitrarily determined according to the design of the product, such as the soy beverage to be used and physical properties to be achieved. The pH of the mixture is preferably in the range of 4.7 or higher and 5.9 or lower. In particular, for a pH range compatible with various product designs, the lower limit is preferably pH 4.8, and more preferably pH 5.0, and the upper limit is preferably pH 5.8, more preferably pH 5.7, and particularly preferably pH 5.6. The pH of the mixture to be obtained in the volume increase step can be, for example, 4.8 or higher and 5.8 or lower, 4.8 or higher and 5.7 or lower, 4.8 or higher and 5.6 or lower, 5.0 or higher and 5.8 or lower, 5.0 or higher and 5.7 or lower, or 5.0 or higher and 5.6 or lower. The pH, which has become acidic in the above-described fermentation step, shifts to the neutral side in the volume increase step, and hence the pH of the mixture to be obtained in the volume increase step is higher than that of the fermentation product (fermented soy beverage) obtained in the fermentation step. In a mode, for example, the pH of the fermentation product at the completion of the fermentation is preferably in the range of 3.5 or higher and 5.5 or lower, and the pH of the mixture to be obtained in the volume increase step is in the range of 4.8 or higher and 5.6 or lower, provided that the pH of the mixture is higher than that of the fermentation product.

The soy beverage to be mixed with the fermented soy beverage in the volume increase step may contain a pH adjuster. The pH adjuster may be of any type and in any amount without limitation, as long as the pH of the soy beverage is kept higher than that of the mixture obtained in the volume increase step, and any pH adjuster addition of which to foods is acceptable can be used. As long as the pH of the soy beverage is kept higher than that of the mixture obtained in the volume increase step, lower pH is desired because the amount added to the fermented soy beverage can be increased. Any of the substances listed above for the buffer can be used as the pH adjuster, and, for example, an organic acid such as citric acid, malic acid, and succinic acid can be used as the pH adjuster.

The soy protein in the soy beverage added in the volume increase step aggregates within a short time because the pH is lowered through mixing with the fermented soy beverage. The fermented soy beverage concentrate to be finally obtained is relatively hard if the pH after the completion of mixing is low, and relatively soft if the pH after the completion of mixing is high. On the other hand, if the pH at the completion of mixing is low, whey separation in the subsequent concentration step is easier, and a solid fraction can be readily collected. If the pH at the completion of mixing is excessively high, more sophisticated separation conditions may be required for collection of a solid fraction because the solid content may partly flow into or remain in whey. Moreover, higher pH gives less feeling of sourness. The pH of the mixture of the fermented soy beverage and the soy beverage can be determined in view of those factors according to the purpose. Even if the type of the soy beverage or the type of the lactic acid bacterium is changed, the value of pH at which the aggregation occurs in the soy beverage is almost unchanged, but may vary to some extent. Accordingly, it is desired to set the pH of the mixture at the completion of the volume increase step on the basis of preliminary test.

The amount of the soy beverage to be mixed in the volume increase step can be appropriately determined according to the pH of the mixture. With regard to the lower limit, the soy beverage in an amount, for example, 0.1 times (10%) or more, preferably 0.2 times (20%) or more, more preferably 0.3 times (30%) or more, further preferably 0.5 times (50%) or more, furthermore preferably 1 time (100%) or more, for example, 1.5 times (150%) or more the amount of the fermented soy beverage can be mixed. The upper limit may be any value that allows the pH after the volume increase step to fall within a desired range, without limitation. If the pH of the soy beverage to be mixed is low, for example, the soy beverage in an amount about 20 times (2000%) the amount of the fermented soy beverage may be mixed. In a mode, the soy beverage in an amount preferably 15 times (1500%) or less, more preferably 10 times (1000%) or less, for example, 5 times (500%) or less the amount of the fermented soy beverage can be added. For example, the soy beverage in an amount 0.1 times or more and 15 times or less, 0.1 times or more and 10 times or less, 0.1 times or more and 5 times or less, 0.2 times or more and 15 times or less, 0.2 times or more and 10 times or less, 0.2 times or more and 5 times or less, 0.3 times or more and 15 times or less, 0.3 times or more and 10 times or less, 0.3 times or more and 5 times or less, 0.5 times or 15 times or less, 0.5 times or more and 10 times or less, or 0.5 times or more and 5 times or less the amount of the fermented soy beverage can be mixed in the volume increase step.

In a mode, the soy beverage in the fermentation step contains a buffer as described, which can provide enhanced acidity after fermentation. By virtue of this, a soy beverage can be added more in the volume increase step, which allows a larger amount of a solid content to be collected. The soy beverage in the volume increase step can contain a pH adjuster. By virtue of this, the soy beverage can be added more in the volume increase step, which allows a larger amount of a solid content to be collected. According to the production method of the present embodiment, a fermented soy beverage concentrate having a high solid content ratio can be obtained even if a huge amount of a soy beverage is added in the volume increase step, as described. Accordingly, a fermented soy beverage concentrate can be produced even with a fermentation system of relatively small scale for the amount of the final product.

The aggregation of protein in the soy beverage added in the volume increase step occurs through chemically induced reaction irrelevant to the fermentation by the microorganism, and hence retention of the optimum temperature for the fermenting microorganism as in the fermentation step is not required. Rather, keeping low temperature during the volume increase step results in a final product having finer structure. Without wishing to be bound by any theory, the reason is inferred as follows: the occurrence of local protein aggregation can be prevented by allowing chemical reaction that causes the aggregation of protein when lactic acid in the fermented soy beverage is mixed with protein in the soy beverage to gradually proceed at low temperature. Therefore, in a mode, it is desired to cool the fermented soy beverage obtained in the fermentation step and mix with the soy beverage cooled in advance, rather than to mix the two without cooling. If the fermented soy beverage and the soy beverage are mixed together at a temperature at which the metabolism of the microorganism used for the fermentation is active, keeping the pH of the mixture at a constant value may be difficult because secondary fermentation occurs to further lower the pH. Also from the viewpoint, it is preferable to perform the volume increase step at low temperature.

For example, the volume increase step can be performed at a temperature of lower than 45°C, for example, of 43°C or lower, preferably of 37°C or lower, more preferably of 30°C or lower. In a mode, the volume increase step can be performed in the temperature range of 0 to 20°C. However, the pre-cooling before the volume increase step is not essential in the present embodiment. Mixing and cooling can be performed simultaneously, and this can be achieved, for example, in such a manner that the fermented soy beverage and the soy beverage are fed little by little to an apparatus having strong stirring power such as an inline mixer, in which they are immediately cooled with a cooling plate while being instantaneously mixed.

The concentration step will be described.

In the mixture of the fermented soy beverage and the soy beverage obtained in the volume increase step, not only the soy protein derived from the fermented soy beverage is aggregating by the effect of acid, but also the soy protein in the soy beverage subsequently added is aggregating by the effect of acid. Thus, not only the protein in the soy beverage fermented in the fermentation step but also the protein in the soy beverage added in the volume increase step can be simultaneously concentrated by concentrating the aggregated solid content from the mixture. Accordingly, a fermented soy beverage concentrate in a huge amount for the size of the fermenter can be obtained in contrast to the case that the mixture is directly concentrated after the fermentation step. The concentration step preferably includes a step of separating a solid fraction containing the solid content concentrated from the mixture from whey or the like as a liquid fraction. In the present embodiment, concentrating the solid content means that the amount of water in a solid fraction, a fraction containing the solid content, is reduced from that before concentration, and the solid fraction after the concentration step may contain water. A separable solid fraction can be obtained preferably by concentrating the solid content from the mixture in the concentration step.

The concentration of the solid content can be performed by using a common method in food processing and food production, for example, with a centrifugal separator (separator), membrane separator, or a combination of them. An apparatus being a fine filtration system and capable of separating solid and liquid from each other in industrial situations, such as a compressor such as a filter press, and a dehydrator, can be used for the concentration operation, without limitation. If the concentration is performed through centrifugation, for example, a centrifugal separation machine for food processing, such as a quark separator for production of quark cheese, can be used. The rotational frequency in centrifugation may be any rotational frequency at which a desired concentrate can be obtained, without limitation; for example, the rotational frequency is in the range of 15,000 ×g or lower, preferably of 1,500 ×g to 10,000 ×g, more preferably of 3,000 ×g to 8,000 ×g. An appropriate rotational frequency and treatment time can be set according to the physical properties of the concentrate to be achieved. For membrane separation, a microfiltration membrane (MF membrane) or ultrafiltration membrane (UF membrane) for use in food processing can be used.

Through such a concentration operation with a centrifugal separator or a membrane separator, low-molecular-weight odor substances derived from soybean or the microorganism, organic acids including lactic acid generated through the fermentation, sugars in the soy beverage, and others are separated together with whey from the solid content. Although the solid fraction to be given through the concentration contains a certain amount of residual whey, the concentrations of organic acids, odor substances, sugars, and others can be significantly reduced through the above-described concentration operation from those of the fermented soy beverage before the volume increase step or those of a concentrate obtained by directly concentrating the fermented soy beverage without the volume increase step. Since the soy protein is collected in the solid fraction through the concentration operation, a fermentation product of a soy beverage containing soy protein in an amount larger than the total amount of soy protein contained in the fermentation product of a soy beverage obtained in the fermentation step can be obtained.

The ratio between the solid fraction and the separated liquid after concentration can be controlled through centrifugal speed, disc area, the feed rate, and so on if a centrifugal separator is used, or through membrane area, the feed rate, the feed pressure, and so on if a membrane separator is used. Through this control, the hardness, fluidity, or the like of the solid fraction to be given can be adjusted.

The thus-obtained fermented soy beverage concentrate has physical properties and flavor similar to those of Greek yogurt, which has a high solid content, and can be directly consumed or used as a cooking ingredient. According to the production method of the present embodiment, it is rather easy to impart flavor or physical properties according to the purpose. If the sourness is reduced by adjusting the pH of the mixture in the volume increase step to a high value close to 6, for example, a concentrate applicable as a food material that gives thick mouse feel like cream is produced and obtained from soybean as an ingredient. Such a fermented soy beverage concentrate gives less feeling of sourness, and hence it is easy to flavor the fermented soy beverage concentrate with a material or flavor having difficulty in matching with sourness, such as tea, cocoa, and chocolate. In addition, a fermented soy beverage concentrate having a texture like quark cheese, which is much thicker than Greek yogurt, can be obtained by increasing the solid content in the concentration step, and such a fermented soy beverage concentrate can be used as a food produced from soybeans as an ingredient and being an alternative to fresh cheese. A seasoned concentrate obtained by adding seasoning ingredients such as vinegar, cooking salt, and spices to the fermented soy beverage concentrate can be used as seasoning sauce such as salad dip, salad dressing, and mayonnaise. The fermented soy beverage concentrate may be frozen for use as a sherbet.

The fermented soy beverage concentrate obtained may be directly used, whereas the expiration date can be extended by disinfection to suppress the fermentation by the microorganism. The disinfection temperature and disinfection time vary among bacterial strains. Since disinfection at high temperature causes the denaturation of soy protein to result in deteriorated physical properties, it is desired to subject the fermented soy beverage concentrate to disinfection treatment at a temperature of 55°C or higher and 63°C or lower for 30 seconds to 10 minutes.

If disinfection after concentration is to be avoided in view of flavor or physical properties, closed systems that can be sterilized with steam can be used for the fermentation tank and the separation system to prevent microbial contamination in the production process to give a hygienic product. In this case, the microorganism used for fermentation survives, and hence use of a microorganism that causes weak after fermentation is desired.

In the present embodiment, the fermented soy beverage concentrate may be any fermented soy beverage concentrate containing a concentrate of a fermented soy beverage resulting from fermentation of a soy beverage, without limitation, and may contain a concentrate of a nonfermented soy beverage or an additional component. The fermented soy beverage concentrate in the present embodiment preferably contains a concentrate of an unfermented soy beverage in addition to a concentrate of a fermented soy beverage.

The fermented soy beverage concentrate produced through the above steps has at least one or more of the following features.
1) The fermented soy beverage concentrate has a high soy protein content because the whey fraction is removed after the soy protein in a soy beverage is subjected to acid coagulation.
2) The fermented soy beverage concentrate contains not only soy protein but also polysaccharides generated by a microorganism such as a lactic acid bacterium and the bacterial cells themselves. Accordingly, the fermented soy beverage concentrate has physical properties with softness, retained fluidity, and smoothness, in contrast to a concentrate obtained through acid precipitation of soy protein by adding lactic acid to a soy beverage. In particular, if a microorganism that gives large generations of polysaccharides is used for fermentation, the fermented soy beverage concentrate has physical properties with softness and smoothness.
3) Any of a wide variety of microorganisms applicable to foods can be used, as long as the microorganism allows protein in a soy beverage to aggregate through fermentation. The availability of precise modification of the physical properties and flavor according to the type of the microorganism enables design utilizing the characteristics of bacterial strains. In addition, health effects derived from microbial fermentation are expected to be provided.
4) The pH of the fermented soy beverage concentrate is higher than that immediately after the fermentation, thus giving less feeling of sourness on being ingested, because a soy beverage is added to increase the pH after coagulation caused by the fermentation and then concentration is performed.
5) Only a soy beverage and a microorganism for fermentation are the essential ingredients, and no additive is fundamentally required.

In addition to the aforementioned features, the production method of the present embodiment has the following advantages.
1) Use of a downsized fermentation system is permitted. Fermentation systems are equipped with a system for disinfection by heating, a thermostat, and a cooler, and require close sealing. For this reason, fermentation systems are larger in scale and more expensive than common tanks and the like. As with the case of production methods for yogurt or cheese, whole volume fermentation is common as a production method in which protein contained in liquid is coagulated through lactic acid fermentation. However, whole volume fermentation requires settling fermentation solution in a fermentation tank for a long fermentation time, and hence requires large capacity and space for the fermentation tank, thus needing a large amount of capital investment for an expensive fermentation system and space acquisition for installation of a production facility. In the production method of the present embodiment, by contrast, only a part of a soy beverage used is fermented and the rest is only mixed after the fermentation. Accordingly, smaller systems and space are permitted for fermentation in the production method of the present embodiment.
2) Strict management of fermentation is not required. In the case of whole volume fermentation as mentioned in 1), the acidity or pH at the completion of fermentation determines the quality of the product. Thus, the fermentation should be managed with great care with respect to the timing to terminate the fermentation by cooling, temperature management for cooling water for the fermentation tank, the difference in the progress of the fermentation due to the unevenness of temperature in the fermentation system, and so on. In the production method of the present embodiment, on the other hand, the acidity or pH of the final product can be adjusted in the volume increase step to mix a fermented soy beverage and an unfermented soy beverage together, and thus strict management of fermentation is not needed.
3) The fermented soy beverage concentrate can be produced without limitation on the types of the soy beverage and microorganism to be used for fermentation. Various products containing soy protein, such as non-processed soymilk, processed soymilk, and whole-soy beverage, can be used for the soy beverage. The microorganism to be used for fermentation may be any microorganism that can cause protein coagulation by generating acid through fermentation of a soy beverage, without limitation, thus giving high degree of freedom for selection of bacterial species and bacterial strains.

A non-claimed embodiment relates to a fermented soy beverage concentrate. In a mode, the fermented soy beverage concentrate of the present embodiment contains 8 g or more, preferably 10 g or more of protein per 100 g of water. In a mode, the ratio (weight ratio) of the amount of protein to the amount of carbohydrate in the composition of the fermented soy beverage concentrate of the present embodiment is 4 or higher, and preferably 5 or higher, in terms of the amount of protein as the amount of carbohydrate is defined as 1.

In a mode, the fermented soy beverage concentrate (e.g., each of fermented soy beverage concentrate obtained in Examples described later) exhibits a particle diameter peak of 20 µm or smaller, preferably of 15 µm or smaller in the particle diameter distribution determined through measurement with a particle size analyzer (laser diffraction/scattering mode) after the structure of the fermented soy beverage concentrate is homogenized by suction and discharge with a 30-mL Terumo syringe (needleless). In a mode, the proportion of the number of particles of 50 µm or larger in size to the total number of particles in the particle diameter distribution determined with the aforementioned method for the fermented soy beverage concentrate of the present embodiment is 20% or less, preferably 10% or less, more preferably 5% or less, further preferably 2% or less, and particularly preferably 1% or less. In a mode, the fermented soy beverage concentrate of the present embodiment has thixotropic characteristics. In a mode, the fermented soy beverage concentrate of the present embodiment exhibits shear stresses (τ; Pa) of 70 or higher and 150 or lower when shear rates (y'; 1/s) varying from 20 to 100 are applied with a rheometer.

### Examples

The following Examples relates to a method for producing a fermented soy beverage concentrate, the method at least including the following steps (1) to (3).
(1) A fermentation step of fermenting a soy beverage to give a fermented soy beverage by adding a microorganism to the soy beverage.
(2) A volume increase step of mixing the fermented soy beverage and a soy beverage together to achieve an increased volume.
(3) A concentration step of concentrating a mixture obtained in the volume increase step.

### [Example 1]

This test demonstrates the relationship between pH after mixing with a soy beverage in the volume increase step and solid fraction ratios after the concentration step for soy beverages of different types or brands used as an ingredient.

Six commercially available soy beverages were inoculated with a lactic acid bacteria starter (SY42 from SACCO Inc.) at an inoculation rate recommended by the manufacturer, and the resultants were fermented (43°C, 10 hours). After cooling to 15°C or lower in a refrigerator, curd formed through lactic acid fermentation was crushed with a spatula. To each fermented soy beverage, a soy beverage identical to that used for the fermentation was gradually added for volume increase, and the resultants were each mixed by stirring. The resulting mixtures were centrifuged (7,000 ×g, 10 min) by using the high-speed refrigerated centrifuge Himac CR-N22 from Koki Holdings Co., Ltd. with the rotor R12A6 to separate into supernatants and precipitates, and thereafter the supernatants were discarded to collect the solid fractions.

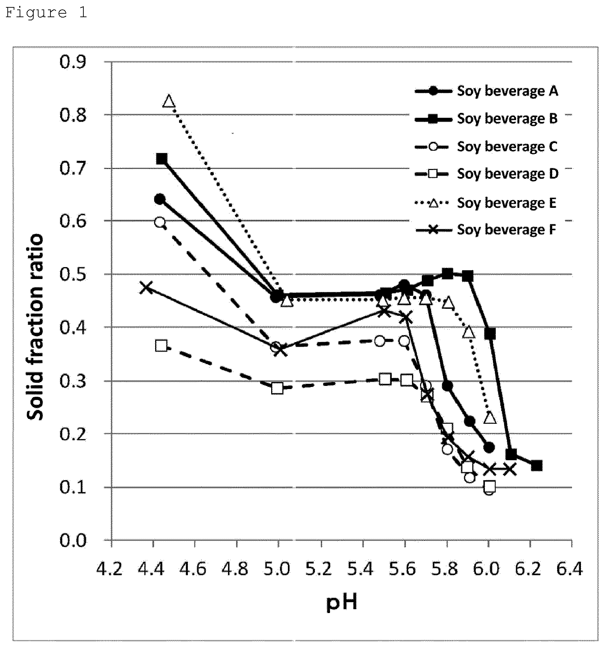

The pH after mixing was adjusted by varying the amount of a soy beverage added to a fermented soy beverage. Figure 1 shows the relationship between pH after being adjusted and solid fraction ratios for the fermented soy beverage concentrate collected through the centrifugation. Each solid fraction ratio is the ratio of the weight of a solid fraction obtained by discarding supernatant after the centrifugation to the total weight of a mixed solution of a fermented soy beverage and a soy beverage before the centrifugation (weight of solid fraction/total weight of mixed solution of fermented soy beverage and soy beverage before centrifugation). It is understood from the result that, although different solid fraction ratios resulted from different soy beverage used, the solid fraction ratio after the concentration step largely changed between pH 5.6 and 6.0, in terms of the pH after mixing with a soy beverage in the volume increase step, for any of the soy beverages. The solid fraction ratio was high at pH 5.7 or lower, in particular, at pH 5.6 or lower, and low at pH 6.0 or higher, in terms of the pH after mixing with a soy beverage in the volume increase step, for any of the soy beverages.

The soy beverages used here were the following six.
Soy beverage A: Oishii Mu-Chosei Tonyu (Tasty Non-Processed Soymilk in English) 1000 mL from Kikkoman Beverage Company (soy solid content: 8% or more)
Soy beverage B: Chosei Tonyu (Processed Soymilk in English) 1000 mL from Kikkoman Beverage Company (soy solid content: 7%)
Soy beverage C: Mainichi Oishii Mu-Chosei Tonyu (Everyday Tasty Non-Processed Soymilk in English) 1000 mL from MARUSAN-AI CO., LTD. (soy solid content: 9%)
Soy beverage D: Chosei Tonyu (Processed Soymilk in English) 1000 mL from MARUSAN-AI CO., LTD. (soy solid content: 7%)
Soy beverage E: Kokusan-Daidzu No Miruku No Yoni Yasashi Daidzu (Milky, Soft Soymilk Made From Domestic Soybean in English) 950 mL from Otsuka Foods Co., Ltd. (whole-soy beverage; soy solid content: 7% or more)
Soy beverage F: Tonyu Inryo Banana (Soymilk Beverage With Banana Flavor in English) 200 mL (soy solid content: 4% or more)

### [Example 2]

In this test, a lactic acid bacterium was added to soy beverages provided by diluting with water and thus having different contents of components, and pH reached through fermentation was examined. Soy beverage A in Example 1 was 1.3-fold, 2-fold, 2.7-fold, 4-fold, and 8-fold diluted with ion-exchanged water. The diluted products of soy beverage A were fermented (43°C, 12 hours) with the lactic acid bacterium in Example 1, and pH at the completion of the fermentation was examined. Table 1 shows the composition of soy beverage A. The composition in Table 1 is as shown in the nutrition facts label based on measurement by the manufacturer. Table 2 shows the dilution rates of the samples, the protein contents calculated on the basis of the dilution rates, and pH after fermentation. For any of the dilution rates, the reached pH was comparable with or lower than that without the dilution operation, and it was thus confirmed that fermentation is possible even if the soy protein content, an index based on protein in a soy beverage, is reduced to 0.5% by dilution.

**[Table 1]**

| Displayed items | | Displayed values |
|---|---|---|
| Calories | | 57 kcal |
| Protein | | 4.1 g |
| Fat | | 3.7 g |
| | - Saturated fatty acid | 0.48 g |
| Cholesterol | | 0 mg |
| Carbohydrate | | 1.8 g |
| | - Sugar | 1.6 g |
| | - Dietary fiber | 0.2 g |
| Sodium chloride equivalent | | 0 g |
| Potassium | | 213 mg |
| Calcium | | 17 mg |
| Magnesium | | 28 mg |
| Iron | | 0.5 mg |

**[Table 2]**

| Dilution rate | Protein content (%) | pH reached after fermentation |
|---|---|---|
| 1.0 | 4.1 | 4.34 |
| 1.3 | 3.1 | 4.28 |
| 2.0 | 2.1 | 4.19 |
| 2.7 | 1.5 | 4.16 |
| 4.0 | 1.0 | 4.19 |
| 8.0 | 0.5 | 4.22 |

### [Example 3]

In this test, solid fraction ratios to be achieved in the concentration step were examined for soy beverage provided by diluting with water and thus having different contents of components and fermented soy beverage derived from them as ingredient. Soy beverage A in Example 1 was 2-fold, 4-fold, and 8-fold diluted with ion-exchanged water, the diluted products of soy beverage A were then fermented (37°C, 16 hours) with the lactic acid bacterium in Example 1, and to each of the resultants the same diluted product of soy beverage A was added to adjust the pH to 5.4 and 6.2. Soy beverage A without dilution was subjected to the same procedure, as a control. Each sample was centrifuged (7,000 ×g, 10 min) by using the high-speed refrigerated centrifuge Himac CR-N22 from Koki Holdings Co., Ltd. with the rotor R18A, and the supernatants were discarded to collect the solid fractions. Table 3 shows the resulting solid fraction ratios at different pH achieved by adjustment in the volume increase step with different dilution rates of the soy beverage used as an ingredient. The eventual solid fraction ratio decreased in a manner depending on the dilution rate of the soy beverage; however, when values of solid fraction ratio multiplied by dilution rate were compared, the samples at the different dilution rates exhibited almost identical numerical values without exception. It was confirmed that soy beverage having a concentration of at least 0.5% or higher, as an index based on soy protein, exhibits almost no difference in the efficiency of collection of solid contents in the concentration step.

**[Table 3]**

| Dilution rate (A) | Protein content (%) (B) | Solid fraction ratio at pH 5.4 | Solid fraction ratio at pH 6.2 | A×B |
|---|---|---|---|---|
| 1 | 4.1 | 0.51 | 0.13 | 4.1 |
| 2 | 2.1 | 0.26 | 0.06 | 4.2 |
| 4 | 1.0 | 0.12 | 0.03 | 4.0 |
| 8 | 0.5 | 0.06 | 0.02 | 4.0 |

### [Comparative Example 1]

This test demonstrates the relationship between pH after the volume increase step and solid fraction ratios after the concentration step when a coagulated soymilk prepared by adding lactic acid to a soy beverage to lower the pH was used in place of the fermented soy beverage in Example 4.

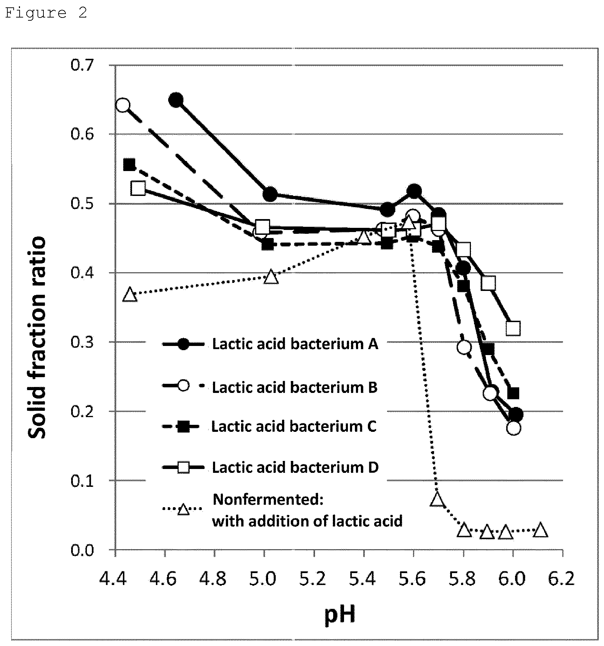

A coagulated soymilk was prepared by adding lactic acid (food additive) to soy beverage A in Example 1 to lower the pH to 4.5. The same soy beverage was added to this coagulated soymilk to adjust the pH, and the resulting mixed solutions were centrifuged (7,000 ×g, 10 min) by using the high-speed refrigerated centrifuge Himac CR-N22 from Koki Holdings Co., Ltd. with the rotor R12A6. The supernatants were discarded to collect the solid fractions. Figure 2 shows the relationship between pH after being adjusted by adding the soy beverage and solid fraction ratios achieved after the centrifugation. Each solid fraction ratio is the ratio of the weight of a solid fraction obtained by discarding supernatant after the centrifugation to the total weight of a mixed solution of the coagulated soymilk and the soy beverage before the centrifugation (weight of solid fraction/total weight of mixed solution of coagulated soymilk and soy beverage before centrifugation). The solid fraction ratio gradually increased from 0.37 to 0.47 in the range from pH 4.5 to pH 5.6, in terms of the pH after being adjusted by adding the soy beverage, whereas the solid fraction ratio rapidly declined to 0.07 at pH 5.7. The solid fraction ratio was 0.03 at pH 5.8 or higher.

### [Example 4]

This test demonstrates the relationship between pH after mixing with a soy beverage in the volume increase step subsequent to fermentation of a soy beverage with lactic acid bacteria starters of different bacterial types or bacterial strains and solid fraction ratios after the concentration step.

Soy beverage A in Example 1 was inoculated with four different commercially available lactic acid bacteria starters, separately, each in a proper amount (an amount recommended by the manufacturer), and the resultants were fermented (43°C, 10 hours; 30°C, 24 hours only for lactic bacterium D). To the fermented soy beverage prepared with the different lactic acid bacteria, a soy beverage identical to that used for the fermentation was added at different ratios, and the resultants were each mixed by stirring for volume increase. The pH of each of the resulting mixtures was measured, and thereafter the mixtures were centrifuged (7,000 ×g, 10 min) for concentration by using the high-speed refrigerated centrifuge Himac CR-N22 from Koki Holdings Co., Ltd. with the rotor R12A6. The supernatants were discarded to collect the solid fraction substances.

Figure 2 shows the relationship between pH after mixing a fermented soy beverage and a soy beverage together and solid fraction ratios. Each solid fraction ratio is the ratio of the weight of a solid fraction obtained by discarding supernatant after the centrifugation to the total weight of a mixed solution of a fermentation product and a soy beverage before the centrifugation (weight of solid fraction/total weight of mixed solution of fermentation product and soy beverage before centrifugation). As is clear from the result, the solid fraction ratio after the concentration step largely changed between pH 5.6 and 6.0, in terms of the pH after mixing with a soy beverage in the volume increase step, for any of the lactic acid bacteria starters. Specifically, the solid fraction ratios were high at pH 5.6 or lower, and low at pH 6.0 or higher. Even at pH 5.7, at which a significantly low solid fraction ratio resulted when the same soy beverage, soy beverage A, was used in Comparative Example 1, a high solid fraction ratio was achieved through fermentation as in the case of pH 5.6 for any of the lactic acid bacteria. Lowered solid fraction ratios resulted when the pH after mixing with a soy beverage in the volume increase step was 5.8 or higher, whereas extreme lowering as in Comparative Example 1 was not found for any of the lactic acid bacteria. At lower than pH 5.7, solid fraction ratios higher than those in Comparative Example 1 were achieved through culture for any of the lactic acid bacteria. The following differences were found between Comparative Example 1 and Example 4: the volume of the solid fraction collectable was maximized at pH 5.6 and reduced as the pH was lowered in Comparative Example 1, whereas the volume of the solid fraction collectable increased as the pH was lowered in Example 4; each of the fermented soy beverage concentrate obtained in Example 4 had a structure softer and smoother than that obtained in Comparative Example 1; and the fermented soy beverage concentrate obtained in Example 4 provided different feeling of flavor and physical properties derived from the different lactic acid bacteria used, each exhibiting the feature of the corresponding lactic acid bacterium in fermentation.

Without wishing to be bound by any theory, the following can be considered: in the case of fermentation with lactic acid bacteria in Example 4, cells of a lactic acid bacterium, polysaccharides generated by the lactic acid bacterium, and others were contained, and tangling of them would be the cause of the increased volume of a solid fraction collectable as the ratio of a fermentation product increased. Although the characteristics of the lactic acid bacteria were reflected on the fermentation products to some extent, a similar trend was found in the relationship between pH values after the volume increase step and solid fraction ratios after concentration for all the lactic acid bacteria used. In the case of the coagulated soymilk formed by acid coagulation with lactic acid, on the other hand, the aggregation of soy protein was enhanced as the pH after the volume increase step was lowered, and this probably led to the smaller volumes of the solid fraction collectable.

The lactic acid bacteria starters have different characters and consist of different species of lactic acid bacteria, as shown below. Lactic bacterium D is available for low-temperature long-time fermentation, and the other lactic bacteria are available for high-temperature short-time fermentation.
- Lactic bacterium A: YO-MIX883 (Streptococcus thermophiles and Lactobacillus delbrueckii subsp. bulgaricus from DuPont de Nemours, Inc.), milk-free, with high polysaccharide generation ability, capable of giving relatively soft fermentation products.
- Lactic bacterium B: CRYOFAST SY42 (Streptococcus thermophiles and Lactobacillus delbrueckii subsp. bulgaricus from SACCO Inc.), milk-free, capable of giving fermentation products having a relatively firm structure.
- Lactic bacterium C: CRYOFAST SY1 (Streptococcus thermophiles and Lactobacillus delbrueckiisubsp. bulgaricus from SACCO Inc.), capable of giving highly sour fermentation products.
- Lactic bacterium D: CRYOFAST MW031N (Lactococcuslactis subsp. lactis, Lactococcus lactis subsp. cremoris, Lactococcus lactis subsp. lactis biovar. diacetylactis, and Leuconostoc mesenteroides from SACCO Inc.), capable of giving fermentation products having flavor like Emmental cheese with sweet fragrance.

### [Example 5]

In this test, the ratio of the amount of a soy beverage that can be added to a given amount of a fermented soy beverage in the volume increase step in a mode of the present embodiment was confirmed.

Soy beverage A in Example 1 was inoculated with lactic bacterium B in Example 4 in a proper amount (an amount recommended by the manufacturer), and the resultant was fermented (43°C, 10 hours). To the resulting fermented soy beverage, a soy beverage identical to that used for the fermentation was added in different amounts, and the resultants were each mixed by stirring. The pH of each of the resulting mixtures was measured.

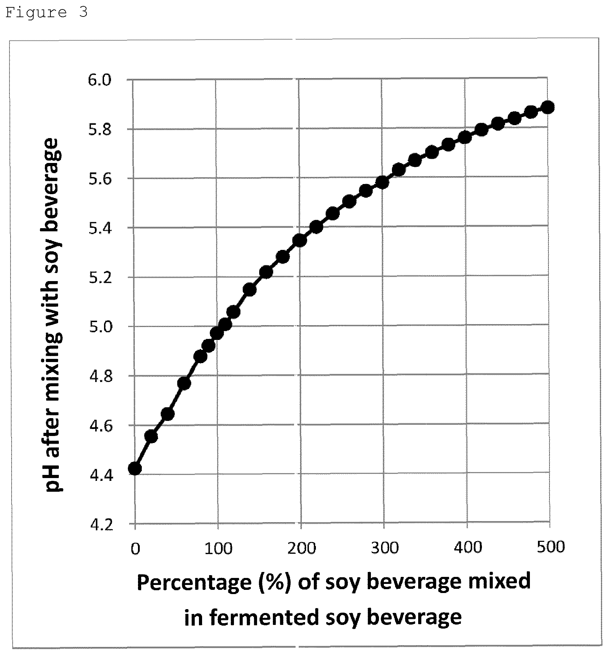

Figure 3 shows the relationship between the ratio of the amount of an added soy beverage to the amount of a fermented soy beverage and pH after mixing. The results in Example 1 have confirmed that soy beverage A used in the present test provides high solid fraction ratios at pH 5.7 or lower. The percentage of the soy beverage added that gave pH 5.7 was 360% in the present test. In other words, it was confirmed that a sufficient amount of a solid content is collectable even when a soy beverage in an amount 3.6 times that of a fermented soy beverage is added in the volume increase step. As demonstrated in Figure 1, pH values after the volume increase step that give high solid fraction ratios vary to some extent among different types of soy beverages. If the pH of a soy beverage is low, a mixture having low pH can be obtained even with addition of a large amount of the soy beverage. Accordingly, a sufficient amount of a solid content would be collectable even with addition of an extremely large amount (about 20 times, for example, about 10 times) of a soy beverage in the volume increase step for some types of soy beverages and some values of pH or the like. The lower limit of the amount of a soy beverage to be added in the volume increase step is not limited as long as the pH after mixing falls within a desired range, and the amount of a soy beverage may be, probably, for example, 10%, 20%, or 30% of the amount of a fermented soy beverage.

### [Reference Example]

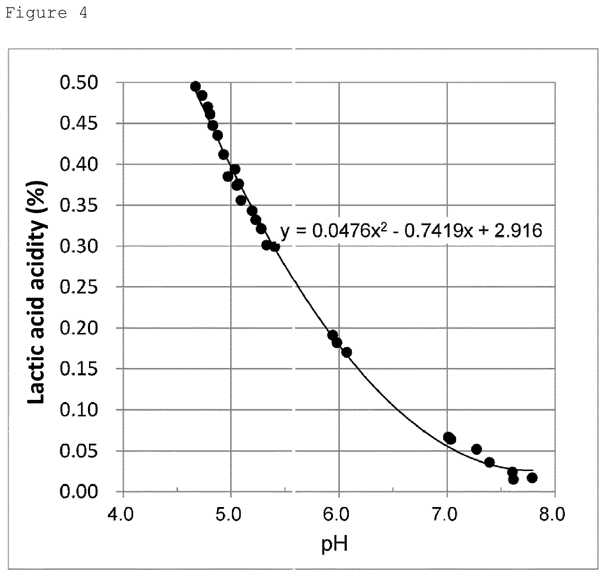

Soy beverage A in Example 1 was fermented with the same lactic acid bacterium as in Example 1, and the relationship between the lactic acid acidity in the fermentation product and pH was monitored through measurement over time. The lactic acid acidity (occasionally referred to as the acidity, simply) of the fermentation product was measured by using the HIRANUMA automatic titrator COM-1700A (HIRANUMA Co., Ltd.). Figure 4 shows the result. An approximate expression representing the relationship between pH and lactic acid acidity was derived on the basis of the graph shown in Figure 4, and additionally presented in Figure 4. Table 4 shows a correspondence table for pH and lactic acid acidity calculated on the basis of the approximate expression.

**[Table 4]**

| Correspondence table for pH and lactic acid acidity (soy beverage A in Example 1) | | | | | | | | |
|---|---|---|---|---|---|---|---|---|
| pH | 3.9 | 4.0 | 4.2 | 5.7 | 5.8 | 6.0 | 6.5 | 6.8 |
| Acidity (%) | 0.747 | 0.710. | 0.640 | 0.234 | 0.214 | 0.178 | 0.093 | 0.072 |

The amount (in terms of weight) of the soy beverage required to adjust the pH of the mixture to 5.7 or 5.8 per 1 part of the fermented soy beverage was calculated on the basis of the correspondence table in Table 4. The results are shown in Tables 5 and 6 below. As is evident from the calculation results, in adding a non-processed soymilk to a sufficiently fermented fermentation product having a pH of 3.9 to adjust the pH to 5.8, the soymilk in an amount about 15 times that of the fermentation product can be added. In view of the fact that the relationship between pH and acidity may vary to some extent among soy beverages, and of the results, it would be possible to add a soy beverage in an amount about 20 times the amount of a fermented soy beverage according to the pH of the fermented soy beverage, the pH of the soy beverage, and the target pH of the mixture.

**[Table 5]**

| Amount of soy beverage per 1 part of fermented soy beverage (for mixture having pH of 5.7) | | | | |
|---|---|---|---|---|
| | pH of fermented soy beverage | | | |
| | pH 3.9 | pH 4.0 | pH 4.2 | |
| | pH 6.0 | 9.2 | 8.6 | 7.3 |
| pH of soy beverage | pH 6.5 | 4.0 | 3.7 | 3.1 |
| | pH 6.8 | 3.2 | 2.9 | 2.5 |

**[Table 6]**

| Amount of soy beverage per 1 part of fermented soy beverage (for mixture having pH of 5.8) | | | | |
|---|---|---|---|---|
| | | pH of fermented soy beverage | | |
| | | pH 3.9 | pH 4.0 | pH 4.2 |
| pH of soy beverage | pH 6.0 | 14.8 | 13.8 | 11.8 |
| | pH 6.5 | 4.9 | 4.5 | 3.9 |
| | pH 6.8 | 3.7 | 3.5 | 3.0 |

### [Example 6]

As the buffering ability of a fermented soy beverage to which a soy beverage is to be added is higher, the pH less varies, and thus a larger amount of the soy beverage can be added. In this test, fermentation was performed with addition of a salt of organic acid to a soy beverage, a soy beverage containing no organic acid salt was added in the volume increase step, and the relationship between the amount of the soy beverage added and the pH was examined.

Sodium malate was added to soy beverage A in Example 1 to give different sodium malate concentrations of 0% to 0.8%, and the resultants were fermented (43°C, 12 hours) with the lactic acid bacterium in Example 1. Table 7 shows pH before and after the fermentation and acidity after the fermentation. The lactic acid acidity of each fermentation product was measured by using the HIRANUMA automatic titrator COM-1700A (HIRANUMA Co., Ltd.). As shown in Table 7, no large difference was found between pH before the fermentation and pH after the fermentation even when the amount of sodium malate added was changed. On the other hand, the acidity in the fermentation products was elevated as the amount of sodium malate added increased.

**[Table 7]**

| Na malate concentration (%) | pH | | Acidity after fermentation (%) |
|---|---|---|---|
| | Before fermentation | After fermentation | |
| 0.00 | 6.61 | 4.37 | 0.70 |
| 0.05 | 6.61 | 4.36 | 0.72 |
| 0.10 | 6.61 | 4.37 | 0.74 |
| 0.20 | 6.60 | 4.39 | 0.77 |
| 0.40 | 6.58 | 4.42 | 0.82 |
| 0.80 | 6.56 | 4.42 | 0.85 |

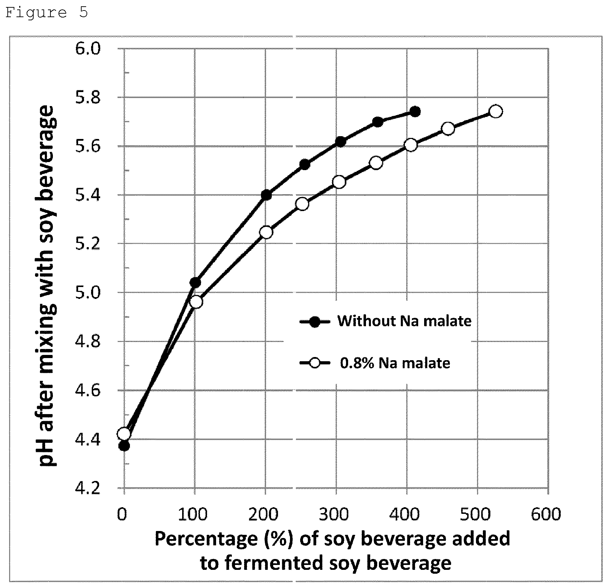

Next, Figure 5 shows the relationship between the amount of a soy beverage added (the amount added (%) relative to the amount of a fermented soy beverage) and pH when a soy beverage containing no sodium malate was added to a fermented soy beverage containing no sodium malate or a fermented soy beverage containing 0.8% sodium malate. As shown in Figure 5, the fermented soy beverage containing sodium malate required larger amounts of the soy beverage added than the fermented soy beverage containing no sodium malate in order to adjust to the same pH. In adjusting to pH 5.7, for example, the soy beverage in an amount about 3.5 times that of a fermentation product was added to the fermented soy beverage containing no sodium malate, and, on the other hand, the soy beverage in an amount about 5 times or more that of a fermentation product was added to the fermented soy beverage containing 0.8% sodium malate. If the buffering ability of a fermented soy beverage is high, the amount of a soy beverage added to the fermentation product in the volume increase step can be increased, and hence a larger amount of a solid content can be probably obtained even from the same amount of a fermented soy beverage in the subsequent concentration step.

Examination of several types of buffers revealed the following fact: if a salt of organic acid whose pKa is between 3.8 and 6, for example, 3.8 or higher and 5.9 or lower (between the pH of a fermentation product and the pH after volume increase), such as sodium citrate and sodium succinate, is added in place of, or in addition to, sodium malate in preparation of a fermented soy beverage, the buffering power of the fermented soy beverage is particularly enhanced, and more lactic acid can be generated (leading to higher acidity) even if the same pH was given in fermentation. Accordingly, it is expected that a larger amount of a soy beverage can be added in the volume increase step, leading to increase in the amount of a collected solid fraction.

The soy beverage to be added to a fermented soy beverage needs to have pH higher than the target pH in the volume increase step, and lower pH in such a range permits larger amounts of the soy beverage added. Therefore, the amount of a soy beverage added can be more increased through adjustment of the pH of the soy beverage by adding a pH adjuster thereto.

### [Example 7]

In this test, the compositions of a fermented soy beverage, a concentrate obtained by directly concentrating a fermented soy beverage without subjecting to the volume increase step, and a fermented soy beverage concentrate obtained by performing the volume increase step of adding a soy beverage to a fermented soy beverage and then concentrating in a mode of the present embodiment were analyzed and compared.

Soy beverage A in Example 1 was inoculated with lactic bacterium B in Example 4 in a proper amount (an amount recommended by the manufacturer), and the resultant was fermented (43°C, 10 hours). Samples 1 to 5 as shown in the following were prepared.
- Sample 1: the resulting fermented soy beverage as it is
- Sample 2: a concentrate obtained by directly centrifuging (7,000 ×g, 10 min) the resulting fermented soy beverage
- Sample 3: the supernatant (whey) obtained in the centrifugation for preparing sample 2
- Sample 4: a fermented soy beverage concentrate obtained in such a manner that a soy beverage identical to that used for the fermentation was added to the fermented soy beverage, the resultant was mixed by stirring to adjust the pH to 5.5, and the mixture was then centrifuged (7,000 ×g, 10 min).
- Sample 5: the supernatant (whey) obtained in the centrifugation for preparing sample 4

Samples 1 to 5 were sent to the general incorporated foundation Japan Food Research Laboratories to commission analysis of nutritional components.

Table 8 shows the result. No difference was found between the amount of protein in the soy beverage after the fermentation and that before the fermentation shown in Table 1. The protein content of sample 2, which was obtained by directly concentrating the fermented soy beverage, was 1.6 times higher than that of sample 1, which was obtained only by fermenting the soy beverage. The protein content of sample 4, a fermented soy beverage concentrate obtained by adding the soy beverage to the fermented soy beverage followed by mixing, and then concentrating the mixture, was a much higher value, specifically, 2.2 times the protein content of sample 1. No large difference was found among the amounts of carbohydrate in samples 1, 2, and 4.

Next, the total amount of protein to be given when the same amount, specifically, 100 g of the fermented soy beverage was treated was focused for each sample. The protein content of sample 1, which was obtained only by fermenting the soy beverage, was 4.1 g. Meanwhile, according to calculation for sample 2, which was obtained by directly concentrating the fermented soy beverage, 4.0 g of protein (a value given by multiplying the protein content of the concentrate, 6.6 g/100 g, by the collection efficiency, 60%) was estimated to be collected in the sample, which was almost the same result as for sample 1. According to calculation for the concentrate obtained by adding the soy beverage to the fermented soy beverage and then concentrating the mixture (sample 4), on the other hand, 12.6 g of protein (a value given by multiplying the protein content, 9.0 g/100 g, by the volume increase ratio resulting from addition of the soy beverage, 3.33, and further multiplying the resultant by the collection efficiency, 42%) was estimated to be collected in the sample; thus, the protein yield of sample 4 was confirmed to be 3 times or more than that of sample 2. The protein contents of the whey obtained by directly concentrating the fermented soy beverage (sample 3) and the whey obtained by adding the soy beverage to the fermented soy beverage followed by mixing and then concentrating the mixture (sample 5) were low, and these results confirmed that the soy protein in the fermented soy beverage and the soy beverage added thereto was efficiently collected in a concentrate.

**[Table 8]**

| Sample No. | Summary of sample | Fermented product:beverage ratio | Collection efficiency after centrifugation | Water (g/100 g) | Protein (g/100 g) | Fat (g/100 g) | Ash (g/100 g) | Carbohydrate (g/100 g) |
|---|---|---|---|---|---|---|---|---|
| 1 | Fermented soy beverage | 1.00:0 | not centrifuged | 90.3 | 4.1 | 3.3 | 0.5 | 1.8 |
| | Concentrate of fermented | | | | | | | |
| 2 | soy beverage (without addition of soy beverage) | 1.00:0 | 60% | 85.6 | 6.6 | 5.4 | 0.6 | 1.8 |
| 3 | Whey of sample 2 | 1.00:0 | 40% | 97.3 | 0.3 | 0.1 | 0.5 | 1.9 |
| 4 | Fermented soy beverage concentrate (with addition of soy beverage and subsequent concentration) | 1.00:2.33 | 42% | 81.0 | 9.0 | 7.7 | 0.6 | 1.7 |
| 5 | Whey of sample 4 | 1.00:2.33 | 58% | 96.9 | 0.5 | 0.1 | 0.5 | 2.1 |

For samples 1, 2, and 4 in Table 8, the amount of protein per 100 g of water and the ratio of the amount of protein to the amount of carbohydrate in each sample are shown below. Soy beverage A before fermentation is designated as sample 0. The amount of protein per 100 g of water was less than 8 g for samples 0 to 2, and 10 g or more for sample 4. The ratio of the amount of protein to the amount of carbohydrate was lower than 4 for samples 0 to 2, and 5 or higher for sample 4.

**[Table 9]**

| Comparison of each sample | | | | | |
|---|---|---|---|---|---|
| Sample No. | Summary of sample | Amount of protein per 100 g of water, (a) | Ratio of (a) relative to (a) of sample 1 | Ratio of amount of protein relative to amount of carbohydrate, (b) | Ratio of (b) relative to (b) of sample 1 |
| 0 | Soy beverage (before fermentation) | 4.54 | 1.00 | 2.24 | 0.99 |
| 1 | Fermented soy beverage | 4.54 | 1.00 | 2.27 | 1.00 |
| 2 | Concentrate of fermented soy beverage (without addition of soy beverage) | 7.71 | 1.70 | 3.66 | 1.61 |
| 4 | Fermented soy beverage concentrate (with addition of soy beverage and subsequent concentration) | 11.11 | 2.45 | 5.29 | 2.33 |

### [Example 8]

This test confirmed difference in physical properties between a product obtained only by fermenting a soy beverage and a product obtained through the volume increase step of mixing a fermented soy beverage and a soy beverage together followed by concentration of the mixture.

Soy beverage A in Example 1 was inoculated with lactic bacterium B in Example 4 in a proper amount (an amount recommended by the manufacturer), and the resultant was fermented (43°C, 10 hours). To the resulting fermented soy beverage, an unfermented soy beverage identical to that used for the fermentation was added for volume increase, and the resultant was mixed by stirring to adjust the pH to 5.6. Thereafter, the mixture was centrifuged (7,000 ×g, 10 min) by using the high-speed refrigerated centrifuge Himac CR-N22 from Koki Holdings Co., Ltd. with the rotor R12A6. The supernatant was discarded to collect the solid fraction. The sample obtained only through fermentation and the sample obtained through fermentation followed by volume increase by adding the soy beverage and concentration by centrifugation were subjected to measurement for hysteresis curves by using a rheometer (HAAKE Viscotester iQ) with continuously varying shear rates.

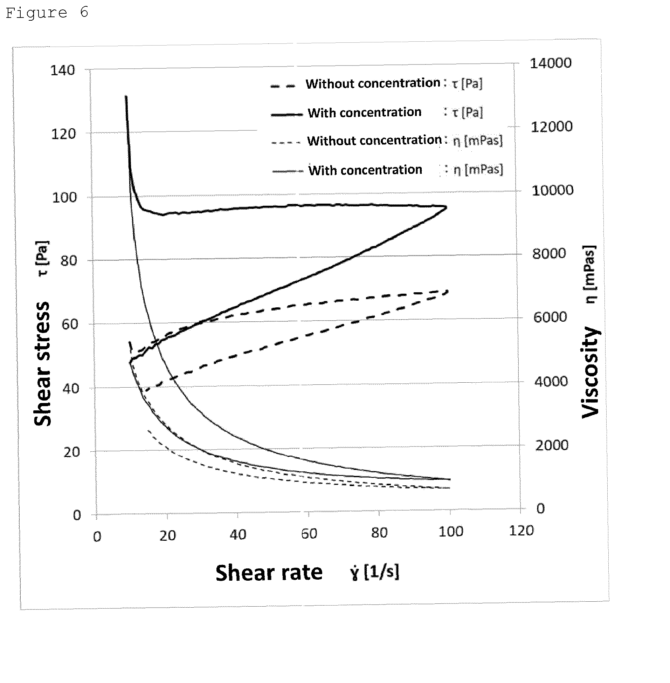

Figure 6 shows the result. The sample obtained with concentration was found to have higher viscosity than the sample obtained only by fermentation all over the region of shear rates for measurement. Accordingly, the sample obtained with concentration also exhibited high shear stress and a large area surrounded by a curve associated with the increase and decrease of the rate, thus being found to have thixotropic characteristics. The thus-obtained findings confirmed that a product to be obtained only by fermenting a soy beverage and a product to be obtained by fermentation followed by mixing with a soy beverage and concentration clearly differ in the physical properties, and that the present production method can provide a product having physical properties that cannot be achieved only by fermentation. In addition, a product obtained by fermentation followed by mixing with a soy beverage and concentration has higher thixotropic characteristics than a product obtained only by fermentation, and hence the two products are largely different also in texture. Specifically, the product obtained by fermentation followed by mixing with a soy beverage and concentration was a product having such physical properties that feeling of viscosity and thus thickness was provided when the product was spooned or immediately after the product was put in the mouth, and smoothness that allowed the product to be swallowed with ease was provided after the product was agitated or chewed.

### [Example 9]

This test confirmed that the physical properties of a fermented soy beverage concentrate to be obtained after concentration vary with variation of pH in mixing for volume increase, the variation caused by varying the amount of a soy beverage to be added to a fermented soy beverage in the volume increase step.

Soy beverage A in Example 1 was inoculated with lactic bacterium B in Example 4 in a proper amount (an amount recommended by the manufacturer), and the resultant was fermented (43°C, 10 hours). To the resulting soy fermentation product, the same unfermented soy beverage was added in various amounts for volume increase, and the resultants were each mixed by stirring to adjust the pH to 5.0, 5.5, 5.6, and 5.7, respectively. Thereafter, the mixtures were centrifuged (7,000 ×g, 10 min) by using the high-speed refrigerated centrifuge Himac CR-N22 from Koki Holdings Co., Ltd. with the rotor R12A6. The supernatants were discarded to collect the solid fractions. The thus-obtained four solid fractions were subjected to linear modulus measurement with varying strain by using a rheometer (HAAKE Viscotester iQ).

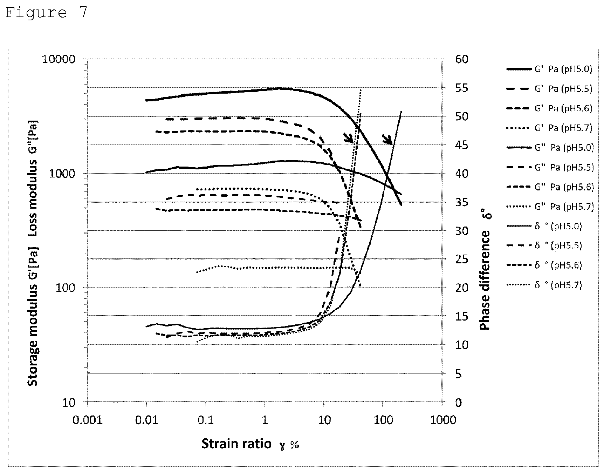

Figure 7 shows the result. It was confirmed that higher pH resulted in lower values for both G' (storage modulus) and G" (loss modulus), and, in other words, that high pH resulted in soft structure. In addition, difference in the point of intersection of the curves for G' and G" (point at phase difference δ° = 45), which indicates the point of transition from being elastic to being plastic, was found between the case of pH 5.0 and the cases of pH 5.5 or higher. Thus, it was confirmed that fermented soy beverage concentrate having different physical properties can be produced by varying pH after adding a soy beverage to a fermented soy beverage in the volume increase step.

### [Comparative Example 2]

This test is a control for Example 10. In the present test, specifically, a product obtained through acid coagulation of a soy beverage by adding lactic acid thereto was used instead of a fermented soy beverage obtained through fermentation by a lactic acid bacterium, and the physical properties of the product were examined.

A coagulated soymilk was prepared by adding lactic acid (food additive) to soy beverage A in Example 1 to lower the pH to 4.5. The same soy beverage was added to this coagulated soymilk to adjust the pH to 5.6. Thereafter, the mixture was centrifuged (7,000 ×g, 10 min) by using the high-speed refrigerated centrifuge Himac CR-N22 from Koki Holdings Co., Ltd. with the rotor R12A6, and the supernatant was discarded to collect the solid fraction. The solid faction obtained was subjected to measurement for hysteresis curves with continuously varying shear rates by using a rheometer (HAAKE Viscotester iQ). In addition, the solid fraction was subjected to linear modulus measurement with varying strain by using the same apparatus. The result will be described in Example 10.

### [Example 10]

In this test, comparison was made on the physical properties of fermented soy beverage concentrate obtained under the same conditions with Comparative Example 2, except that different lactic acid bacterial strains were used for fermentation.

Soy beverage A in Example 1 was inoculated with three different commercially available lactic acid bacteria starters (lactic bacterium A or B in Example 4) or lactic bacterium E (ST386 (Streptococcus thermophiles from SACCO Inc.)), separately, each in a proper amount (an amount recommended by the manufacturer), and the resultants were fermented (43°C, 10 hours). The same unfermented soy beverage was added to each of the resulting fermented soy beverages for volume increase, and the resultants were each mixed by stirring to adjust the pH to 5.6. Thereafter, the mixtures were centrifuged (7,000 ×g, 10 min) by using the high-speed refrigerated centrifuge Himac CR-N22 from Koki Holdings Co., Ltd. with the rotor R12A6, and the supernatants were discarded to collect the solid fractions. The thus-obtained three solid fractions were subjected to measurement for hysteresis curves by using a rheometer (HAAKE Viscotester iQ) with continuously varying shear rates. The three solid fractions were subjected to linear modulus measurement with varying strain by using a rheometer (HAAKE Viscotester iQ).

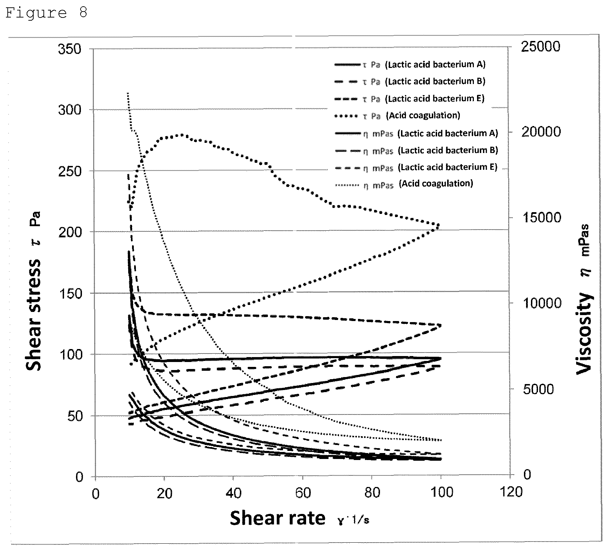

Figure 8 shows the resulting hysteresis curves. All over the region of shear rates examined, the samples in the present Example obtained through fermentation with lactic acid bacteria exhibited significantly lower values for both shear stress and viscosity than the sample obtained by using an acid-coagulated product in Comparative Example 2. In addition, it was confirmed that values of viscosity and shear stress at the same shear rate differed among the lactic acid bacteria used, and, in other words, that fermented soy beverage concentrate having physical properties differing to some degree can be produced with use of different microorganisms. The samples obtained by using lactic bacteria A and B, which are commercially available as strains having strong capability of generating polysaccharide, thus being suitable for fermentation of low-fat milk and plant materials, each had physical properties with softness, and exhibited lower values for both shear stress and viscosity than the sample obtained by using an acid-coagulated product in Comparative Example 2 and the sample obtained by using lactic bacterium E.

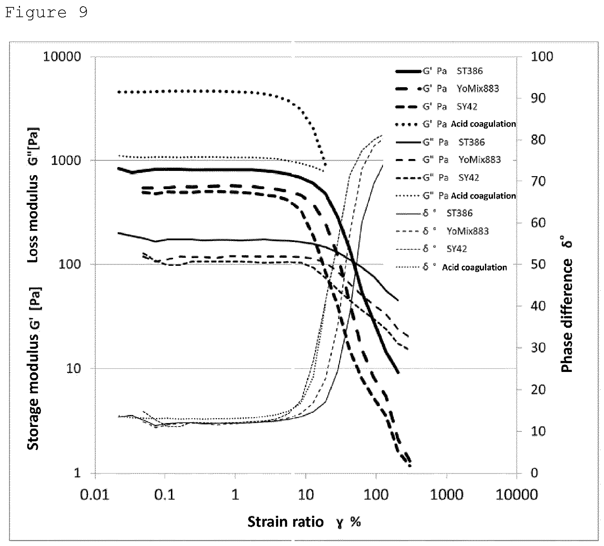

Figure 9 shows the results of the linear modulus measurement. The samples obtained through fermentation with lactic acid bacteria in the present Example exhibited significantly lower values for both G' (storage modulus) and G" (loss modulus) than the sample obtained from an acid-coagulated product in Comparative Example 2, and the sample obtained by using lactic bacteria A and B, which had high capability of generating polysaccharide, exhibited particularly low values. These results confirmed that fermented soy beverage concentrate exhibits physical properties with higher softness and smoothness after the concentration step than the sample obtained from an acid-coagulated product formed by adding lactic acid to a soy beverage, and, in particular, soy beverage concentrate obtained by using strains that give high levels of polysaccharide generation is much softer and smoother. Slight differences between the measurement result in Figure 7 and that in Figure 9 are due to the degree of structural break in the operation of transferring a sample spooned from a fermentation vessel to a site for measurement in the measurement apparatus; however, the behaviors of G' and G" values were confirmed to be similar between the two measurements. The fermented soy beverage concentrate exhibited shear stresses (τ; Pa) of 70 or higher and 150 or lower when the shear rate (γ'; 1/s) was varied from 20 to 100 with a rheometer.

The results of the measurement using a rheometer were further supported by texture. The samples obtained by using fermentation products formed by lactic acid bacteria each had softer and smoother structure than the sample obtained by using an acid-coagulated product, and the products obtained by using lactic bacteria A and B were particularly smooth. On the other hand, the sample obtained by using lactic bacterium E had relatively firm structure, giving strong feeling of thickness.

### [Example 11]

In this test, examination was performed on the influence of the temperature in mixing a fermented soy beverage and a soy beverage together in the volume increase step on the physical properties of a fermented soy beverage concentrate to be given after the concentration step.

Soy beverage A in Example 1 was inoculated with lactic bacterium A in Example 4 in a proper amount (an amount recommended by the manufacturer), and the resultant was fermented (43°C, 10 hours). The fermented soy beverage after the completion of the fermentation was cooled to 4°C, and then used for the test. The fermented soy beverage after being cooled and a soy beverage identical to that used for the fermentation were placed for conditioning in thermostatic tanks whose temperature had been adjusted to 0°C, 20°C, 30°C, 37°C, and 43°C, respectively. Thereafter, the fermented soy beverage and the soy beverage were mixed for volume increase to reach pH 5.5 with keeping the presented temperature. Each mixture with keeping the presented temperature was centrifuged (7,000 ×g, 10 min) by using the high-speed refrigerated centrifuge Himac CR-N22 from Koki Holdings Co., Ltd. with the rotor R12A6. The supernatants were discarded to collect the solid fractions. The structure of each of the samples obtained was homogenized by suction and discharge with a 30-mL Terumo syringe (needleless), and the particle diameter distribution was then determined by using a particle size analyzer (the laser diffraction/scattering particle diameter distribution analyzer LA-960 manufactured by HORIBA, Ltd.) .

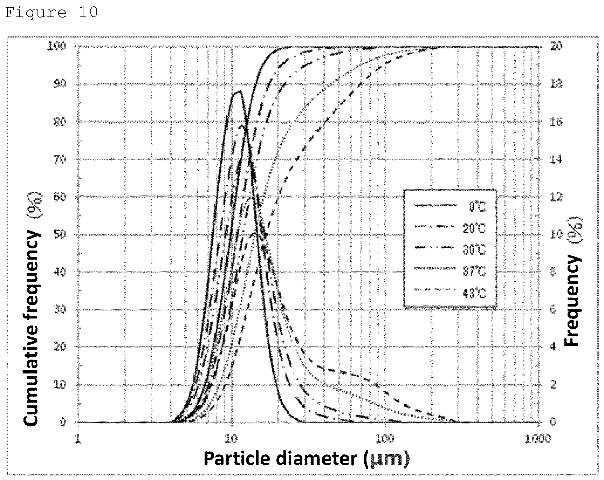

Figure 10 shows the result. It was found as a tendency that, as the temperature in the volume increase step increased in the order of 0°C, 20°C, 30°C, 37°C, and 43°C, the number of large particles clearly increased in the particle size distribution. In particular, the following tendency was found: as the temperature increased, the number of particles of around 5 µm to 20 µm in particle diameter decreased and the number of particles of around 50 µm to 100 µm significantly increased. Texture variation accompanied this; specifically, lower temperature in the volume increase step resulted in smoother texture, and higher temperature caused rough feeling on the tongue. Figure 10 shows cumulative frequencies (cumulative distributions) calculated from smaller particle size in the measurements of particle diameter distribution. As the temperature in the volume increase step decreased, the ratio of the number of particles of 50 µm or larger to the total number of particles decreased in the order of 20% or lower, 10% or lower, and 5% or lower, and improved mouse feel was provided. Reduction of the ratio of the number of particles of 50 µm or larger to the total number of particles to 5% or lower, more preferably to 2% or lower, particularly preferably to 1% or lower would be desirable for keeping smooth texture.

### [Example 12]

In this test, the relationship between centrifugal force and solid fraction ratios to be given was examined for the case that solid-liquid separation was performed by using a centrifugal separator in the concentration step.

Soy beverage A in Example 1 was inoculated with lactic bacterium C in Example 4 in a proper amount (an amount recommended by the manufacturer), and the resultant was fermented (43°C, 10 hours). To the resulting fermented soy beverage, a soy beverage identical to that used for the fermentation was added for volume increase, and the resultant was mixed by stirring to adjust the pH to 5.5. The resulting mixture was centrifuged for solid-liquid separation by using a centrifuge (the high-speed refrigerated centrifuge Himac CR-N22 from Koki Holdings Co., Ltd. with the rotor R18A). Most centrifugal separators for the food industry are of disc type, and their centrifugal force is typically about 5,000 ×g to 10,000 ×g. The interval between discs in disc centrifuges, which is as narrow as 1 mm or smaller, allows instantaneous settling. However, the present test was experiment with 50-mL centrifugal separator tubes, which give long settling distance, and hence the centrifugation time was set to 10 minutes. The rotational frequency of the rotor was adjusted to set the centrifugal force to 3,000 ×g to 10,000 ×g, and the ratios of the solid fraction given at different centrifugal forces were compared. Each ratio of the solid fraction was calculated by dividing the weight of the solid fraction obtained by discarding supernatant after centrifugation by the weight of the sample subjected to centrifugation.

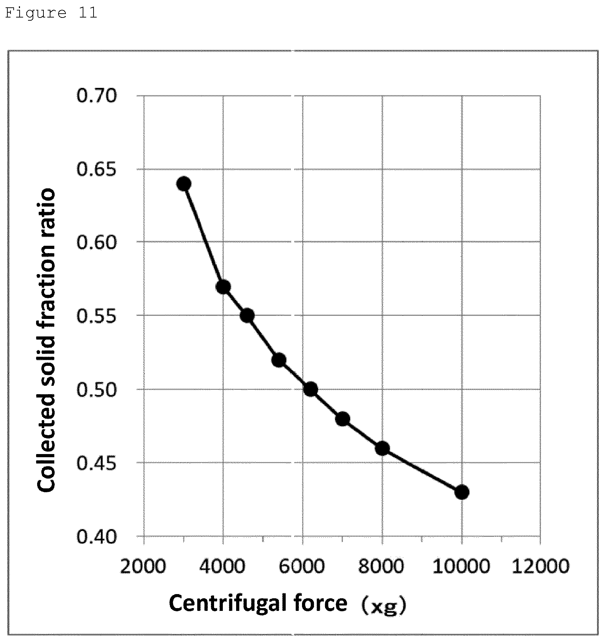

Figure 11 shows the result. At any of the tested centrifugal forces from 3,000 ×g to 10,000 ×g, the solid fraction was completely separated from supernatant, and no turbidity was found in the supernatant. The ratio of the solid fraction was in the range of 0.43 to 0.64, and the ratio of the solid fraction decreased as the centrifugal force increased. This is presumably because the solid fraction was compressed at higher centrifugal force to squeeze whey contained therein out of the solid fraction. The result confirmed that the concentration step in the present invention can be readily performed by using a common centrifugal separator used in the food industry. In addition, it was confirmed that a product having desired hardness can be obtained by adjusting the conditions for centrifugation.

The present application claims priority to Japanese Patent Application No. 2020-45455 filed on March 16, 2020, and the contents thereof are incorporated herein by reference.

### Industrial Applicability

The production method of the present invention allows fermented soy beverage concentrate having a high soy protein content to be efficiently produced even with a fermentation system of small scale. The production method of the present invention gives high degree of freedom for selection of soy beverages and fermenting microorganisms for use, thus allowing production of fermented soy beverage concentrate utilizing the characteristics of different materials. In addition, the production method of the present invention allows production of fermented soy beverage concentrate having physical properties with smoothness. The Fermented soy beverage concentrate produced can be widely used as food or ingredient for food production.

## Claims

1. A method for producing a fermented soy beverage concentrate, the method comprising:
a fermentation step of fermenting a soy beverage by adding a microorganism to the soy beverage;
a volume increase step of mixing a fermented soy beverage obtained in the fermentation step and a soy beverage together to achieve an increased volume, thereby giving a mixture having a pH of lower than 6.0; and
a concentration step of concentrating a solid content from the mixture obtained in the volume increase step.

2. The method according to claim 1, wherein the microorganism includes a microbial species belonging to a genus selected from the genus Lactobacillus, the genus Lactococcus, the genus Leuconostoc, the genus Streptococcus, the genus Pediococcus, and the genus Bifidobacterium, wherein each of the microbial genera is based on classic taxonomy.

3. The method according to claim 1 or 2, wherein the concentration step includes a step of separating a solid fraction containing the solid content concentrated from the mixture.

4. The method according to any one of claims 1 to 3, wherein the weight of the soy beverage in the volume increase step is 20% or more and 500% or less of the weight of the fermented soy beverage.

5. The method according to any one of claims 1 to 4, wherein the volume increase step is performed at a temperature of 37°C or lower.

6. The method according to any one of claims 1 to 5, wherein the soy beverage in the fermentation step and/or the soy beverage in the volume increase step have/has a soy protein content of 0.5% or more.

7. The method according to any one of claims 1 to 6, wherein the soy beverage in the fermentation step contains a buffer.

8. The method according to any one of claims 1 to 7, wherein the soy beverage in the volume increase step contains a pH adjuster.

9. The method according to any one of claims 1 to 8, wherein
the fermented soy beverage after the fermentation step has a pH of 3.5 or higher and 5.5 or lower, and
the mixture after the volume increase step has a pH of 4.7 or higher and 5.9 or lower, provided that the pH of the mixture after the volume increase step is higher than the pH of the fermented soy beverage after the fermentation step.

10. The method according to any one of claims 1 to 9, wherein the volume increase step is a step of mixing the fermented soy beverage obtained in the fermentation step and a soy beverage together to give a mixture having a pH of 5.7 or lower.

## Patentansprüche

1. Verfahren zum Herstellen eines konzentrierten fermentierten Sojagetränkes, wobei das Verfahren Folgendes umfasst:
einen Fermentierungsschritt des Fermentierens eines Sojagetränkes durch Hinzufügen eines Mikroorganismus zu dem Sojagetränk;
einen Volumenerhöhungsschritt des Mischens eines fermentierten Sojagetränkes, das in dem Fermentierungsschritt erhalten wird, und eines Sojagetränkes miteinander, um ein erhöhtes Volumen zu erreichen, wodurch sich ein Gemisch ergibt, das einen pH-Wert von weniger als 6,0 aufweist; und
einen Konzentrierungsschritt des Konzentrierens eines Feststoffgehaltes von dem Gemisch, das in dem Volumenerhöhungsschritt erhalten wird.

2. Verfahren nach Anspruch 1, wobei der Mikroorganismus eine Mikrobenspezies beinhaltet, die zu einer Gattung gehört, die aus Folgendem ausgewählt ist: der Gattung Lactobacillus, der Gattung Lactococcus, der Gattung Leuconostoc, der Gattung Streptococcus, der Gattung Pediococcus und der Gattung Bifidobacterium, wobei jede der Mikrobenspezies auf einer klassischen Taxonomie basiert.

3. Verfahren nach Anspruch 1 oder 2, wobei der Konzentrierungsschritt einen Schritt des Trennens eines Feststoffanteils beinhaltet, der den Feststoffgehalt beinhaltet, der von dem Gemisch konzentriert ist.

4. Verfahren nach einem der Ansprüche 1 bis 3, wobei das Gewicht des Sojagetränkes in dem Volumenerhöhungsschritt 20 % oder mehr und 500% oder geringer des Gewichtes des fermentierten Sojagetränkes beträgt.

5. Verfahren nach einem der Ansprüche 1 bis 4, wobei der Volumenerhöhungsschritt bei einer Temperatur von 37 °C oder weniger durchgeführt wird.

6. Verfahren nach einem der Ansprüche 1 bis 5, wobei das Sojagetränk in dem Fermentierungsschritt und/oder das Sojagetränk in dem Volumenerhöhungsschritt einen Sojaproteingehalt von 0,5 % oder mehr aufweisen/aufweist.

7. Verfahren nach einem der Ansprüche 1 bis 6, wobei das Sojagetränk in dem Fermentierungsschritt eine Pufferlösung enthält.

8. Verfahren nach einem der Ansprüche 1 bis 7, wobei das Sojagetränk in dem Volumenerhöhungsschritt ein pH-Einstellungsmittel enthält.

9. Verfahren nach einem der Ansprüche 1 bis 8, wobei das fermentierte Sojagetränk nach dem Fermentierungsschritt einen pH-Wert von 3,5 oder höher und 5,5 oder weniger aufweist und
das Gemisch nach dem Volumenerhöhungsschritt einen pH-Wert von 4,7 oder höher und 5,9 oder weniger aufweist, vorausgesetzt, dass der pH-Wert des Gemisches nach dem Volumenerhöhungsschritt höher als der pH-Wert des fermentierten Sojagetränkes nach dem Fermentierungsschritt ist.

10. Verfahren nach einem der Ansprüche 1 bis 9, wobei der Volumenerhöhungsschritt ein Schritt des Mischens des fermentierten Sojagetränkes, das in dem Fermentierungsschritt erhalten wird, und einem Sojagetränk miteinander ist, um ein Gemisch zu ergeben, das einen pH-Wert von 5,7 oder weniger aufweist.

## Revendications

1. Procédé de production d'un concentré de boisson à base de soja fermentée, le procédé comprenant :
une étape de fermentation consistant à fermenter une boisson à base de soja par l'ajout d'un micro-organisme à la boisson à base de soja ;
une étape d'augmentation de volume consistant à mélanger ensemble une boisson à base de soja fermentée obtenue dans l'étape de fermentation et une boisson à base de soja pour obtenir un volume augmenté, donnant ainsi un mélange présentant un pH inférieur à 6,0 ; et
une étape de concentration consistant à concentrer une teneur en matières solides provenant du mélange obtenu dans l'étape d'augmentation de volume.

2. Procédé selon la revendication 1, dans lequel le micro-organisme inclut une espèce microbienne appartenant à un genre sélectionné parmi le genre Lactobacillus, le genre Lactococcus, le genre Leuconostoc, le genre Streptococcus, le genre Pediococcus et le genre Bifidobacterium, dans lequel chacun des genres microbiens est basé sur la taxonomie classique.

3. Procédé selon la revendication 1 ou 2, dans lequel l'étape de concentration inclut une étape de séparation d'une fraction solide contenant la teneur en matières solides concentrée provenant du mélange.

4. Procédé selon l'une quelconque des revendications 1 à 3, dans lequel le poids de la boisson à base de soja dans l'étape d'augmentation de volume est de 20 % ou plus et de 500 % ou moins du poids de la boisson à base de soja fermentée.

5. Procédé selon l'une quelconque des revendications 1 à 4, dans lequel l'étape d'augmentation de volume est réalisée à une température de 37 °C ou moins.

6. Procédé selon l'une quelconque des revendications 1 à 5, dans lequel la boisson à base de soja dans l'étape de fermentation et/ou la boisson à base de soja dans l'étape d'augmentation de volume présentent /présente une teneur en protéines de soja de 0,5 % ou plus.

7. Procédé selon l'une quelconque des revendications 1 à 6, dans lequel la boisson à base de soja dans l'étape de fermentation contient un tampon.

8. Procédé selon l'une quelconque des revendications 1 à 7, dans lequel la boisson à base de soja dans l'étape d'augmentation de volume contient un ajusteur de pH.

9. Procédé selon l'une quelconque des revendications 1 à 8, dans lequel la boisson à base de soja fermentée après l'étape de fermentation présente un pH de 3,5 ou plus et de 5,5 ou moins, et
le mélange après l'étape d'augmentation de volume présente un pH de 4,7 ou plus et de 5,9 ou moins, à condition que le pH du mélange après l'étape d'augmentation de volume soit supérieur au pH de la boisson à base de soja fermentée après l'étape de fermentation.

10. Procédé selon l'une quelconque des revendications 1 à 9, dans lequel l'étape d'augmentation de volume est une étape consistant à mélanger ensemble la boisson à base de soja fermentée obtenue dans l'étape de fermentation et une boisson à base de soja pour donner un mélange présentant un pH de 5,7 ou moins.
